(19) Europäisches Patentamt
European Patent Office
Office européen des brevets

(11) **EP 4 575 457 A1**

(12) **EUROPEAN PATENT APPLICATION**

(43) Date of publication:
**25.06.2025 Bulletin 2025/26**

(21) Application number: **24217398.7**

(22) Date of filing: **04.12.2024**

(51) International Patent Classification (IPC):
*G01N 15/08* (2006.01)

(52) Cooperative Patent Classification (CPC):
**G01N 15/0826; G01N 15/0806;** G01N 2015/084;
G01N 2015/0846

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023 US 202363612380 P**

(71) Applicant: **Johnson Matthey Public Limited
Company
London EC2V 7AD (GB)**

(72) Inventors:
• **REES, Ian David**
  **Royston, SG8 5HE (GB)**
• **THEOBALD, Mark Brian Michael**
  **Royston, SG8 5HE (GB)**

(74) Representative: **Boult Wade Tennant LLP
Salisbury Square House
8 Salisbury Square
London EC4Y 8AP (GB)**

(54) **METHODS AND APPARATUS RELATING TO WALL-FLOW FILTERS**

(57) Method of assessing a wall-flow filter, the wall-flow filter having an inlet end, an outlet end and a porous structure, the method comprising:

a) establishing a gas flow through the wall-flow filter from the inlet end to the outlet end via the porous structure;

b) entraining particles in the gas flow so that the particles pass into the wall-flow filter through the inlet end causing at least a portion of the particles to be deposited on and/or in the porous structure;

c) using a photometer located downstream of the outlet end of the wall-flow filter to detect at a plurality of points in time throughout a detection period a photometer signal related to scattering and/or attenuation of electromagnetic radiation by particles that have passed through the porous structure and out of the outlet end of the wall-flow filter;

d) obtaining a photometer signal profile based on the detected photometer signal throughout the detection period; and

e) obtaining a characteristic of the wall-flow filter and/or making a qualitative assessment of the wall-flow filter based on the photometer signal profile.

Figure 1

**Description**

**Field of the disclosure**

The disclosure relates to apparatus for applying particles to a wall-flow filter and methods of assessing wall-flow filters.

**Background**

There are concerns about emissions of particulate matter (PM), commonly referred to as soot, from internal combustion engines and especially from diesel and gasoline engines in automotive applications. The main concerns are associated with potential health effects, and in particular with very tiny particles having sizes in the nanometer range.

Diesel particulate filters (DPFs) and gasoline particulate filters (GPFs) have been fabricated using a variety of materials including sintered metal, ceramic or metal fibres etc., with the most common type in actual mass production being the wall-flow filter kind made from porous ceramic material fabricated in the form of a monolithic array of many small channels running along the length of the body. Alternate channels are plugged at one end so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminium titanate. The actual shape and dimensions of practical wall-flow filter on vehicles as well as properties such as the channel wall thickness and its porosity etc. depend on the application concerned. The average dimensions of the pores in the filter channel wall-flow filter of a ceramic wall-flow filter through which the gas passes are typically in the range 5 to 50 $\mu$m and usually about 20 $\mu$m. In marked contrast, the size of most diesel particulate matter from a modern passenger car high speed diesel engine is very much smaller, e.g. 10 to 200nm.

Some PM may be retained within the pore structure in the wall-flow filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the wall-flow filter as it is deposited which prevents a particulate cake from building up on the filter. For some filters, for example light duty diesel particulate filters, it is periodically necessary to remove trapped PM from the wall-flow filter to prevent the buildup of excessive backpressure that is detrimental to engine performance and can cause poor fuel economy. So in diesel applications, retained PM may be removed from the wall-flow filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the wall-flow filter can lead to a marked decrease in filtration efficiency and release of a burst of many small particles into the environment. Thus, wall-flow filter may have low filtration efficiency when they are first used and subsequently after each regeneration event and also during the latter part of each regeneration process. It would be desirable to improve and or maintain filtration efficiency at all times.

EP 4013954 A1 describes a method and apparatus for treating a filter for filtering particulate matter from exhaust gas, the method comprising the steps of: a) containing a dry powder in a reservoir; b) locating a filter in a filter holder, the filter comprising a porous substrate having an inlet face and an outlet face, the inlet face and the outlet face being separated by a porous structure; c) establishing a primary gas flow through the porous structure of the filter by applying a pressure reduction to the outlet face of the filter; d) transferring the dry powder from the reservoir to a spray device located upstream of the inlet face of the filter; and e) spraying the dry powder, using the spray device, towards the inlet face of the filter such that the dry powder is entrained in the primary gas flow and passes through the inlet face of the filter to contact the porous structure. Coating the porous structure with dry powder has been found to improve the filtration efficiency of the filter when first used.

The coating of dry powder onto the wall-flow filter during manufacture changes the filtration efficiency of the wall-flow filter. It would be desirable to be able to assess the coating of particles (for example of dry powder) onto a wall-flow filter during manufacture of the wall-flow filter to reduce the chance that wall-flow filters are produced that have unsuitable filtration efficiencies for their intended use.

It is known to assess the filtration efficiency of a wall-flow filter offline by running an engine test with inline optical particle counters (OPC) on both ends of the wall-flow filter. The filtration efficiency (FiE) is calculated as the ratio of the particulate number measurements:

$$Filtration\ Efficiency = \frac{Upstream\ particle\ count - Downstream\ particle\ count}{Upstream\ particle\ count}$$

In a manufacturing setting, it may not be practical to run an engine test since engine or diesel particulates may not be available. In such cases a volatile aerosol may be used instead. In addition, running an offline engine or aerosol test on all manufactured parts would be too time consuming and expensive. Further, for measuring the smallest (nm) size particles it becomes necessary to use condensation particle counters (CPC) which are expensive.

Against this background, it would be desirable to provide improved apparatus for applying particles to a wall-flow filter and methods of assessing wall-flow filters.

**Summary of the disclosure**

In one aspect of this disclosure, there is provided a method of assessing a wall-flow filter, the wall-flow filter having an inlet end and an outlet end with the inlet end and the outlet end being separated by a porous structure, the method comprising:

a) establishing a gas flow through the wall-flow filter from the inlet end to the outlet end via the porous structure;
b) entraining particles in the gas flow so that the particles pass into the wall-flow filter through the inlet end causing at least a portion of the particles to be deposited on and/or in the porous structure;
c) using a photometer located downstream of the outlet end of the wall-flow filter to detect at a plurality of points in time throughout a detection period a photometer signal related to scattering and/or attenuation of electromagnetic radiation by particles that have passed through the porous structure and out of the outlet end of the wall-flow filter;
d) obtaining a photometer signal profile based on the detected photometer signal throughout the detection period; and
e) obtaining a characteristic of the wall-flow filter and/or making a qualitative assessment of the wall-flow filter based on the photometer signal profile.

The present inventors have discovered that the photometer signal profile generated by the method may be used to obtain useful information about the coating of the wall-flow filter with the particles.

Beneficially, the method of the present disclosure permits the characterisation and/or qualitative assessment of a wall-flow filter using only a single photometer located downstream of the outlet end of the wall-flow filter that only has to detect particles that have passed through the porous structure and out of the outlet end of the wall-flow filter. This reduces complexity and expense compared to prior art methods that require optical particle counters both upstream and downstream of the wall-flow filter. Also, complexity is reduced since no detection of the particle numbers upstream of the wall-flow filter is required.

The method may be applied during the manufacturing process of the wall-flow filter and may be run 'online', i.e. while the wall-flow filter is on the production line in contrast to requiring the wall-flow filter to be taken offline to a different quality assessment location.

The method may be run in a short time period and may be therefore used on a large proportion of the manufactured filters, optionally substantially or, or all of the manufactured filters on the production line.

Making the qualitative assessment of the wall-flow filter may comprise comparing the photometer signal profile against one or more predetermined photometer signal profiles.

The predetermined photometer signal profile or profiles may be obtained theoretically or by experiment on sample wall-flow filters that are known to be of good quality. One or more predetermined photometer signal profile may be used. For example, a different predetermined photometer signal profile may be used for each type and/or size of wall-flow filter or for each manufactured batch of wall-flow filters.

The comparison may comprise determining whether and/or an extent to which the photometer signal profile matches or deviates from the predetermined photometer signal profile. The comparison may be made manually by a human operator (for example by direct visual comparison). Alternatively, and preferably the comparison may be made automatically or semi-automatically using computing means.

The comparison may be used to determine useful information about the wall-flow filter. For example, the useful information may be to identify those filters that require more detailed examination. Thus, the qualitative assessment may be assessing whether the wall-flow filter passes or fails - with failing filters being sent for additional examination.

Making the qualitative assessment of the wall-flow filter may comprise comparing one or more characteristics of the photometer signal profile against one or more threshold values. For example, the one or more characteristics of the photometer signal profile may include one or more of a peak height, a number of peaks, a decay rate, a decay time, and a numerical integral of the photometer signal profile.

For example, the predetermined photometer signal profile may comprise a single peak and any tested wall-flow filters producing a photometer signal profile with two or three or more peaks may be failed. Additional peaks in the photometer signal profile may be indicative of particles that have initially been trapped in porous structure of the wall-flow filter becoming dislodged during coating or may be indicative of a cracked wall-flow filter.

In another example, the predetermined photometer signal profile may comprise a baseline signal level that is reached within a set time and any tested wall-flow filters producing a baseline signal level above that level at the set time may be failed. Failure of the signal level to reach the required baseline level within the set time may be indicative of a cracked wall-flow filter.

The method of the present disclosure may also allow obtaining a characteristic of the wall-flow filter may be based on numerical integration of the photometer signal profile throughout the detection period. It has been found that the numerical integral of the photometer signal profile, i.e. the area under a plot of the photometer signal profile can be used as a useful indicator of one or more characteristics of a wall-flow filter. For example, the characteristic of the wall-flow filter may comprise one or more of a mean pore size and/or a wall thickness and/or a porosity of the wall-flow filter. For example, the numerical integral of the photometer signal profile may show a positive correlation with the mean pore size and/or the porosity of the wall-flow filter and/or may show a negative correlation with the wall thickness of the wall-flow filter.

The method may further comprise measuring a backpressure of the wall-flow filter during and/or after deposition of the particles on or in the porous structure. Beneficially the combination of the backpressure of the wall-flow filter and the photometer signal profile may provide useful information about the filter. For example, a qualitative assessment using both the photometer signal profile and the backpressure of the wall-flow filter may be more robust and provide a higher degree of confidence that the filter is of a good quality.

The method may further comprise calculating or inferring a filtration efficiency of the wall-flow filter based on the one or more characteristics of the wall-flow filter and the backpressure of the wall-flow filter.

The method may further comprise measuring a change in mass of the wall-flow filter during deposition of the particles on and/or in the porous structure; and calculating or inferring a filtration efficiency of the wall-flow filter based on the characteristic of the wall-flow filter and the change in mass of the wall-flow filter.

Obtaining the characteristic of the wall-flow filter and/or making the qualitative assessment of the wall-flow filter may be accomplished without counting the particles before they flow into the inlet end of the wall-flow filter. Advantageously, this may simplify and speed up the assessment since an upstream particle counter, or sampling of the upstream gas flow, may not be required by the method.

The detection period may cover at least the period in time when the particles are being entrained in the gas flow. Optionally the detection period may extend for a period of time after the particles have stopped being entrained in the gas flow. This may advantageously allow for a period of time for particles to pass through the filter and be detected.

The photometer signal may be detected at a sampling rate of 0.5 to 5 samples/second; optionally at 1 sample/second. Beneficially, these sampling rates have been found to produce good balance between computational load and the fidelity of the photometer signal profile produced.

The photometer may be zeroed multiple times throughout the detection period. Optionally and preferably, the photometer may be zeroed before each detection of the photometer signal throughout the detection period. Advantageously, zeroing the photometer has been found to significantly improve the quality of the photometer signal profile produced. For example, zeroing the photometer accommodates the system to very small changes in temperature that can occur throughout the detection period and between detections. As a result, a highly sensitive detection may be achieved able to detect levels of particles down to 1-10 PPM.

All of the gas flow exiting the outlet end of the wall-flow filter may pass through a flow cell of the photometer. Beneficially, the method lends itself to having all of the gas flow pass through the flow cell and not just a percentage of the gas flow that is sampled from a main flow (e.g. by teeing off a sampling conduit). This may improve the accuracy and reliability of the photometer signal profile since no assumptions need to be made that a sampled gas flow is truly representative of the whole gas flow.

The photometer may comprise a flow cell, a light source and at least one light detector. More than one detector may be provided. For example a detector for scattered light and a detector for transmitted light may be provided. The detector for scattered light may be used for detecting a signal related to scattering of electromagnetic radiation by the particles. The detector for transmitted light may be used for detecting a signal related to attenuation of electromagnetic radiation by the particles.

The flow cell may have a path length between the light source and the at least one light detector of 75 to 100mm; optionally 90mm. The photometer may comprise an LED light source; optionally a blue LED light source; optionally a blue LED light source emitting light with a wavelength of 400 to 490nm, optionally 450 to 490nm, optionally at 470nm. Beneficially, such a photometer has been found to be particularly suitable for detecting low levels of particle numbers in a gas flow.

The photometer may comprise an amplifier, wherein a detected voltage of the light detector is amplified by a factor of greater than 5,000 to produce the photometer signal, optionally by a factor of greater than 9,000, optionally by a factor of 9,999 +/- 500. Beneficially, it has been found that applying relatively high amplification gain provides a detectable photometer signal profile able to detect low levels of particle numbers. Optionally, as noted above, the photometer may be zeroed multiple times throughout the detection period. This may beneficially allow high amplification gains to be applied to the signal without overly amplifying background noise or temperature artefacts.

The photometer may be a turbidimeter. While turbidimeters are normally used for assessing turbidity of a liquid, it has been surprisingly found that a turbidimeter may function very well when used to detect relatively low levels of particles in a gas flow.

The particles entrained in the gas flow may be particles of dry powder. Alternatively, the particles entrained in the gas flow may be in the form of a wet aerosol.

The method may further comprise calcining the wall-flow filter after deposition of the particles on and/or in the porous structure.

In one aspect of this disclosure, there is provided an apparatus for applying particles to a wall-flow filter, the wall-flow filter having an inlet end and an outlet end with the inlet end and the outlet end being separated by a porous structure, the apparatus comprising:

a) a holder for holding the wall-flow filter;
b) an inlet chamber in communication with the inlet end;
c) a vacuum generator in communication with the outlet end for establishing a gas flow through the wall-flow filter from the inlet end to the outlet end;
d) a device for spraying the particles into or within the inlet chamber;
e) a photometer located downstream of the outlet end of the wall-flow filter; and
f) a controller configured to:

i) detect at a plurality of points in time throughout a detection period a photometer signal of the photometer based on scattering and/or attenuation of electromagnetic radiation by particles that have passed through the porous structure and out of the outlet end of the wall-flow filter, and
ii) to obtain a photometer signal profile based on the detected photometer signal throughout the detection period; and
iii) to obtain a characteristic of the wall-flow filter and/or make a qualitative assessment of the wall-flow filter based on the photometer signal profile.

The advantages and benefits described above in relation to the method apply equally to the apparatus. The apparatus may be used to perform the method described in the earlier aspect.

The apparatus may further comprise a mass sensor for measuring a change in mass of the wall-flow filter during deposition of the particles on and/or in the porous structure.

The controller may be configured to detect the photometer signal at a sampling rate of 0.5 to 5 samples/second; optionally at 1 sample/second.

The controller may be configured to zero the photometer multiple times throughout the detection period; optionally to zero the photometer before each detection of the photometer signal throughout the detection period.

The apparatus may be configured such that all of the gas flow exiting the outlet end of the wall-flow filter passes through a flow cell of the photometer.

The photometer may comprise a flow cell, a light source and at least one light detector.

The flow cell may have a path length between the light source and the at least one light detector of 75 to 100mm; optionally 90mm.

The photometer may comprise an LED light source; optionally a blue LED light source; optionally a blue LED light source emitting light with a wavelength of 400 to 490nm, optionally 450 to 490nm, optionally at 470nm.

The photometer may comprise an amplifier, wherein a detected voltage of the light detector may be amplified by a factor of greater than 5,000 to produce the photometer signal, optionally by a factor of greater than 9,000, optionally by a factor of 9,999 +/- 500.

The photometer may be a turbidimeter.

The particles may be particles of dry powder. Alternatively, the particles entrained in the gas flow may be in the form of a wet aerosol.

In this specification the term "wall-flow filter" refers to a porous substrate that has a porous structure suitable for filtering particulate matter from exhaust gas. The porous substrate may be formed for example from sintered metal, ceramic or metal fibres etc. The wall-flow filter may be in the form of a monolith. For example, the wall-flow filter may be formed from cordierite, various forms of silicon carbide or aluminium titanate.

The wall-flow filter may be a "bare" filter or alternatively may be one with an incorporated catalytic function ability such as oxidation, NOx-trapping, or selective catalytic reduction activity. The porous substrate may comprise a composition (known as a washcoat) that coats the porous structure of the wall-flow filter. The washcoat may be a catalytic washcoat. The catalytic washcoat may comprise a catalyst, selected from the group consisting of a hydrocarbon trap, a three-way catalyst (TWC), a NOx absorber, an oxidation catalyst, a selective catalytic reduction (SCR) catalyst, a lean NOx catalyst and combinations of any two or more thereof. The catalyst, for example the TWC, NOx absorber, oxidation catalyst, hydrocarbon trap and the lean NOx catalyst, may contain one or more platinum group metals, particularly those selected from the group consisting of platinum, palladium and rhodium.

The wall-flow filter may, for example, be a diesel particulate filter (DPF), a catalysed soot filter (CSF), a selective catalytic reduction filter (SCRF), a lean NOx trap filter (LNTF), a gasoline particulate filter (GPF), an ammonia slip catalyst filter (ASCF), or a combination of two or more thereof (e.g. a filter comprising a selective catalytic reduction (SCR) catalyst and an ammonia slip catalyst (ASC).

The shape and dimensions of the wall-flow filter, for example properties such as the channel wall thickness and its porosity etc. may be varied depending on the intended application for the wall-flow filter. The wall-flow filter may be configured for use with an internal combustion engine to filter the exhaust gas emitted by the internal combustion engine. The internal combustion engine may be a gasoline spark ignition engine. However, the wall-flow filter finds particular application when configured for use with an internal combustion engine in the form of a diesel or gasoline engine.

In this specification the terms "inlet end" and "outlet end" refer to the orientation of the wall-flow filter when being assessed with the gas flow passing therethrough. It will be understood that the wall-flow filter may adopt other orientations in subsequent treatment steps or use, for example when used in a vehicle to treat exhaust gases. For example, exhaust gas flow in use through the wall-flow filter may be from the "inlet end" to the "outlet end" or vice versa.

The particles entrained in the gas flow may be in the form of a wet aerosol. However, more preferably the particles entrained in the gas flow are in the form of a dry powder. In this specification the term "dry powder" refers to a particulate composition that is not suspended or dissolved in a liquid. It is not meant to necessarily imply a complete absence of all water molecules. The dry powder is preferably free-flowing.

In some embodiments the dry powder may comprise or consist of a silicone resin. Silicone resins are known and are branched, cagelike oligosiloxanes and polysiloxanes. The branching in silicone resins results from the presence of so called "T" and/or "Q" units in the resin which refer to $RSiO_3$ and $SiO_a$ units (R is an alkyl or aryl group), respectively, wherein further silicon units are bonded to the oxygen atoms. "M" units, i.e., $R_3SiO$ unit are terminal units wherein the oxygen atom provides a link to the resin backbone. Similarly, "D" units, i.e., $R_2SiO_2$ units provide linear connectivity across the two oxygen atoms. One well known nonbranched and linear polysiloxane is polydimethylsiloxane (PDMS; i.e., $(Me_2SiO)_n$).

Preferably, the silicone resin is a solid at room temperature (e.g., about 25°C). Accordingly, the silicone resin preferably has a melting point of greater than 25°C, preferably greater than 30°C, more preferably greater than 35°C. Preferably, the melting point of the silicone resin is less than 100°C, preferably less than 95°C, less than 90°C, less than 85°C or less than 80°C. Non-branched polysiloxanes such as PDMS typically have lower melting points than silicone resins which are branched. For example, the melting point of PDMS is about-40°C. WO 2011/151711 discloses binding powder in place by treatment with polydimethylsiloxane which forms silica when hydrolysed at sufficiently high temperature.

Similarly, it may be preferable that the silicone resin has a glass transition temperature ($T_g$) of greater than 30°C, preferably greater than 35°C, and/or less than 100°C, preferably less than 80°C. Without wishing to be bound by theory, it is believed that silicone resins which have such melting points and/or glass transition temperatures are particularly suited for the powder coating process, i.e., for effective particulate dispersion across the porous substrate, yet low enough to permit low temperature calcination thereby effectively and efficiently adhering inorganic particles to gas contacting surfaces of the channel walls of the porous substrate.

Preferably, the silicone resin has a molecular weight of greater than 1,000, preferably greater than 2,000, preferably greater than 5,000, preferably greater than 10,000, and/or a molecular weight of less than 500,000, preferably less than 200,000.

As used herein, molecular weight refers to the weight average molecular weight (Mw) which may be measured using any conventional means in the art. In some embodiments, the molecular weight may be relatively low since the hydrogen bonding provided by hydroxy functionalities provides the silicone resin with a sufficiently high melting point and/or glass transition temperature. Accordingly, in some embodiments the molecular weight of the silicon resin may be from 1,000 to 10,000, preferably from 1,000 to 5,000, preferably from 1,200 to 3,500, such as from 1,500 to 2,000. Silicone resins having molecular weights below 1,000 are less preferred since they are typically either liquid and not suitable for dry spraying or do not have as much branching as larger molecules which is believed to provide enhanced binding of the inorganic particles to the porous substrate.

Nevertheless, the molecular weight of the silicone resin may preferably be from 15,000 to 150,000, preferably from 20,000 to 120,000, preferably from 60,000 to 100,000. Some preferable resins have an $M_W$ of from 8,000 to 15,000, some from 20,000 to 60,000 and others from 80,000 to 120,000.

It is particularly preferred that the silicone resin has the formula $[R_xSiX_yO_z]_n$, wherein R is an alkyl or aryl group, X is a functional group bonded to silicon, and wherein z is more than 1 and less than 2. As will be appreciated, n is large so as to provide an oligomer or polymer necessary for a silicone resin, particularly a resin which is solid at room temperature. Whilst dependent on the molecular mass of the R and X groups, an $M_W$ of greater than 1,000 may be achieved where n is greater than 10, an $M_W$ of greater than 10,000 may be achieved where n is greater than 100 and an $M_W$ of greater than 100,000 may be achieved where n is greater than 1,000. Accordingly, n may preferably be greater than 10, greater than 100, greater than 1,000.

As will be appreciated, R is an alkyl or an aryl bonded to silicon and X is a non-hydrocarbon functional group bonded to silicon. Equally, since silicon is a tetravalent atom, it will be appreciated that $x + y + 2z = 4$. $z$ is less than 2 since where $z = 2$, $x$ and $y = 0$ providing silica (i.e., silicon dioxide; $(SiO_2)_n$). Similarly, $z$ is greater than 1 since where $z = 1$, $x + y = 2$ providing a substituted polysiloxane (e.g. $(RXSiO)_n$) consisting of "D" units providing a linear resin (e.g. -O-(SiRX)-O-(SiRX)-O-). One example is polydimethylsiloxane. Accordingly, O refers to oxygen bridging two silicon atoms in the polymeric backbone of the silicone resin.

Preferably, $0 < x + y < 2$, preferably $0 < x + y \leq 1.5$, preferably $0 < x + y \leq 1$. Preferably, x, y and/or x + y is greater than 0.1, preferably greater than 0.2. In one preferred embodiment, x + y is 1 providing a silicone resin known generally as a polysilsesquioxane. Preferably, y is less than 1 and/or y is less than x. Even more preferably, $2y \leq x$, preferably $5y \leq x$, preferably $10y \leq x$. In one embodiment, y is 0. For example, y is 0 where the polysilsesquioxane is a polyalkylsilsesquioxane such as polymethylsilsesquioxane $(MeSiO_{3/2})_n$.

Typically, where present, X is one or more of H, hydroxy (OH), Cl and $C_1$-$C_6$ alkoxy, preferably one or more of OH and $C_1$-$C_6$ alkoxy, preferably wherein the $C_1$-$C_6$ alkoxy is selected from methoxy ($OCH_3$) and ethoxy ($OCH_2CH_3$). In a particularly preferred embodiment, X is one or both of OH and ethoxy. However, X is a functional group which can also be a reactive functional group such as aminyl ($NH_2$, $NR_2$), epoxy, acrylate, and vinyl, though these are less preferred since the presence of hydroxy or alkoxy groups is believed to provide more effective cross-linking during calcination. As described above, any oxygen present in the terminal functional group does not contribute to "$O_z$" in the above formula which refers to silicon bridging oxygen atoms.

In some embodiments the dry powder may comprise or consist of a zeolite. Zeolites are structures formed from alumina and silica and the SAR determines the reactive sites within the zeolite structure. The zeolite may be a small pore zeolite (e.g. a zeolite having a maximum ring size of eight tetrahedral atoms), a medium pore zeolite (e.g. a zeolite having a maximum ring size of ten tetrahedral atoms) or a large pore zeolite (e.g. a zeolite having a maximum ring size of twelve tetrahedral atoms) or a combination of two or more thereof.

Examples of suitable zeolites include silicate zeolite, aluminosilicate zeolite, metal-substituted aluminosilicate zeolite, AIPO, MeAIPO, SAPO, MeAPSO, and the like. In some embodiments, the zeolites are selected from aluminosilicate, borosilicate, gallosilicate, SAPO, AIPO, MeAPSO, and MeAPO zeolites.

When the zeolite is a small pore zeolite, then the small pore zeolite may have a framework structure represented by a Framework Type Code (FTC) selected from the group comprising (e.g. consisting of) ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or combination and/or an intergrowth of two or more thereof. In some embodiments, the small pore zeolite has a framework structure selected from the group comprising (e.g. consisting of) CHA, LEV, AEI, AFX, ERI, LTA, SFW, KFI, DDR and ITE. In some embodiments, the small pore zeolite has a framework structure selected from the group comprising (e.g. consisting of) CHA and AEI. The small pore zeolite may have a CHA framework structure.

When the zeolite is a medium pore zeolite, then the medium pore zeolite may have a framework structure represented by a Framework Type Code (FTC) selected from the group comprising (e.g. consisting of) AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, SVR, SZR, TER, TON, TUN, UOS, VSV, WEI and WEN, or a mixture and/or an intergrowth of two or more thereof. In some embodiments, the medium pore zeolite has a framework structure selected from the group comprising (e.g. consisting of) FER, MEL, MFI, and STT. In some embodiments, the medium pore zeolite has a framework structure selected from the group comprising (e.g. consisting of) FER and MFI, particularly MFI. When the medium pore molecular sieve has a FER or MFI framework, then the zeolite may be ferrierite, silicalite or ZSM-5.

When the zeolite is a large pore zeolite, then the large pore zeolite may have a framework structure represented by a Framework Type Code (FTC) selected from the group comprising (e.g. consisting of) AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. In some embodiments, the large pore zeolite has a framework structure selected from the group comprising (e.g. consisting of) AFI, BEA, MAZ, MOR, and OFF. In some embodiments, the large pore zeolite has a framework structure selected from the group comprising (e.g. consisting of) BEA, MOR and FAU. When the large pore molecular has a framework structure of FTC BEA, FAU or MOR, then the zeolite may be a beta zeolite, faujasite, zeolite Y, zeolite X or mordenite.

In some embodiments, the zeolite has a framework type selected from ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AVL, AWO, AWW, BCT, BEA, BEC, BIK, BOG, BPH, BRE, CAN, CAS, SCO, CFI, SGF, CGS, CHA, CHI, CLO, CON, CZP, DAC, DDR, DFO, DFT, DOH, DON, EAB, EDI, EEI, EMT, EON, EPI, ERI, ESV, ETR, EUO, FAU, FER, FRA, GIS, GIU, GME, GON, GOO, HEU, IFR, IFY, IHW, IRN, ISV, ITE, ITH, ITW, IWR, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSO, MTF, MTN, MTT, MTW, MWF, MWW, NAB, NAT, NES, NON, NPO, NPT, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SFW, SGT, SOD, SOS, SSY, STF, STI, STT, TER, THO, TON, TSC, UEI, UFI, UOZ, USI, UTL, VET, WI, VNI, VSV, WIE, WEN, YUG, ZON, or combinations thereof. In some embodiments, the zeolite has a framework type selected from AEI, AFT, AFV, AFX, AVL, BEA, CHA, DDR, EAB, EEI, ERI, FAU, FER, IFY, IRN, KFI, LEV, LTA, LTN, MER, MOR, MWF, MFI, NPT, PAU, RHO, RIE, RTH, SAS, SAT, SAV, SFW, TSC, and UFI.

In another embodiment, the inorganic particles are refractory oxide particles which can be based on an oxide selected from the group consisting of alumina, silica, zirconia, ceria, chromia, magnesia, calcia, titania and mixed oxides of any two or more thereof. Preferably, the refractory oxide particles comprise calcium aluminate, fumed alumina, fumed silica, fumed titania, fumed zirconia, fumed ceria, alumina aerogel, silica aerogel, titania aerogel, zirconia aerogel, ceria aerogel or a mixture thereof. The one or more fumed refractory powders (refractory oxide particles) may be produced by a pyrogenic process, for example flame pyrolysis.

In some embodiments the dry powder may comprise or consist of a metal compound for forming by thermal decomposition a metal oxide. The dry powder may consist of a single metal compound of may consist of a mixture or blend or successive doses of two or more metal compounds. The metal compound may contain one or more metal cations. Where a plurality of metal cations is present these may be of the same or of different metals. The metal compound may comprise or consist of a metal hydroxide, a metal phosphate, a metal carbonate, a metal sulphate, a metal perchlorate, a metal iodide, a metal oxalate, a metal acetate, a metal chlorate or a mixture thereof. The metal of the metal compound may comprise or consist of one or more of magnesium, calcium, strontium, barium, aluminium, zirconium, manganese, lithium, iron, cobalt, nickel, copper, or gallium. The dry powder may additionally comprise a metal oxide or mixed metal oxide. Optionally the dry powder comprises 90 wt% or greater of the metal compound for forming by thermal decomposition a metal oxide and 10 wt% or less of the metal oxide or mixed metal oxide. Optionally the dry powder comprises 95 wt% or greater of the metal compound for forming by thermal decomposition a metal oxide and 5 wt% or less of the metal oxide or mixed metal oxide. Optionally the dry powder comprises 99 wt% or greater of the metal compound for forming by thermal decomposition a metal oxide and 1 wt% or less of the metal oxide or mixed metal oxide. The metal of the metal oxide or mixed metal oxide may comprise or consist of one or more of aluminium, magnesium, calcium, strontium, barium, aluminium, zirconium, manganese, lithium, iron, cobalt, nickel, copper, or gallium. Optionally the dry powder comprises or consists of a metal hydroxide, a metal phosphate, a metal carbonate or a mixture thereof. The metal hydroxide may be selected from the group consisting of magnesium hydroxide, calcium hydroxide, strontium hydroxide and barium hydroxide. The metal phosphate may be selected from the group consisting of magnesium phosphate, calcium phosphate, strontium phosphate and barium phosphate. The metal carbonate may be selected from the group consisting of magnesium carbonate, calcium carbonate, strontium carbonate and barium carbonate.

The dry powder may consist of a single powder type or a mixture of powder types. For example the dry powder may comprise or consist of a mixture of zeolite and silicone resin.

The gas flow may be established by using a vacuum generator. In this specification the term "vacuum generator" refers to an apparatus or combination of apparatus that function to produce a pressure reduction. Non-limiting examples of suitable apparatus include vacuum generators that operate on the venturi principle, vacuum pumps, for example rotary vane and liquid ring vacuum pumps, and regenerative blowers. The gas may be air or other suitable gas.

In this specification the term "controller" may refer to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc.

Brief description of the drawings

Aspects and embodiments of the present disclosure will now be described, by way of example only, with reference to the accompanying drawings, in which:

Figure 1 is a schematic illustration of an apparatus according to the present disclosure;
Figure 2 is a flowchart of a method according to the present disclosure;
Figure 3 is a schematic illustration of a photometer;
Figure 4 is a graph of a photometer signal profile;
Figure 5 is a graph of mean pore size against the numerical integral of the photometer signal profile;
Figure 6 is a graph of porosity against the numerical integral of the photometer signal profile; and
Figure 7 is a graph of wall thickness against the numerical integral of the photometer signal profile.

Detailed description

The skilled reader will recognise that one or more features of one aspect or embodiment of the present disclosure may be combined with one or more features of any other aspect or embodiment of the present disclosure unless the immediate context teaches otherwise.

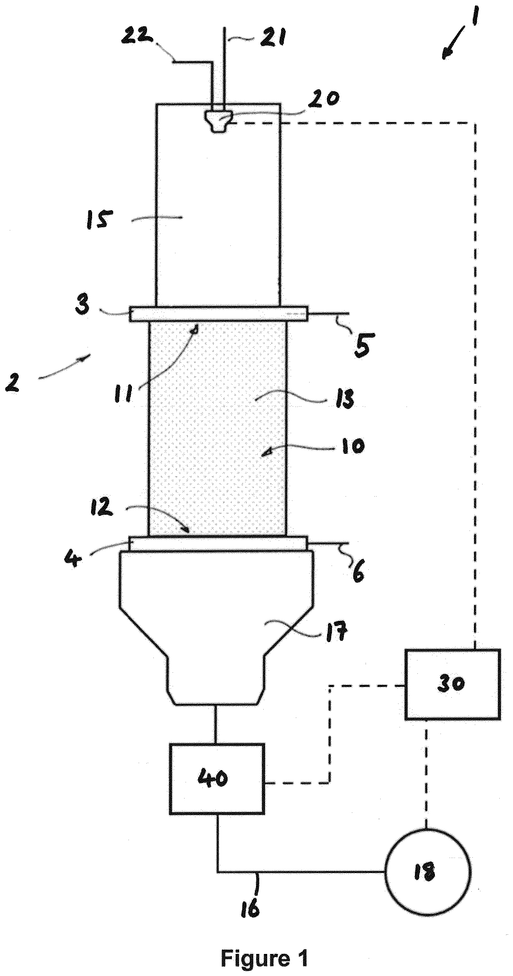

An example of an apparatus in accordance with the present disclosure will now be described with reference to Figure 1 which shows a schematic diagram of an apparatus 1 for treating a wall-flow filter 10 for filtering particulate matter from exhaust gas. The wall-flow filter 10 is of a type having an inlet end 11 and an outlet end 12, the inlet end 11 and the outlet end 12 being separated by a porous structure 13.

The apparatus 1 may comprise a holder 2 for holding the wall-flow filter 10, an inlet chamber 15 in communication with the inlet end 11, a vacuum generator in communication with the outlet end 12 for establishing a gas flow through the wall-flow filter 10 from the inlet end 11 to the outlet end 12, and a spray device for spraying particles, for example of dry powder, into or within the inlet chamber 15.

The holder 2 may comprise means for holding securely the wall-flow filter 10. The holder 2 may comprise an upper inflatable collar 3 supplied by inflation line 5 and a lower inflatable collar 4 supplied by inflation line 6.

The vacuum generator may comprise a vacuum cone 17 connected via a line 16 to, for example, a regenerative blower 18.

The spray device may comprise a spray nozzle 20 supplied with dry powder along a powder supply line 21, for example by gravity feed. A gas feed line 22 may supply compressed gas, e.g. compressed air, to the spray nozzle 20 for entraining, mobilising and spraying the dry powder out of the spray nozzle 20. The spray nozzle 20 may be located within the inlet chamber 15 as shown in Figure 1 or alternatively located outside the inlet chamber 15 but orientated to spray the dry powder into the inlet chamber 15. The spray device may comprise a spray nozzle. The spray nozzle may use a flow of gas to entrain the dry powder during spraying. For example, the spray device may comprise a compressed air gun. A non-limiting example of a suitable compressed air gun is the STAR Professional gravity feed spray gun 1.4mm, part no. STA2591100C.

The inlet chamber 15 may comprise a tube 15 having, optionally, an open upper end. The tube 15 may have a shape conformal to the shape of the inlet end 11 and a size that is equal to or large than the inlet end 11.

The apparatus 1 comprises a photometer 40 located downstream of the outlet end 12 of the wall-flow filter 10. A controller 30 is provided that may be operatively connected to the photometer 40, the vacuum generator and the spray device.

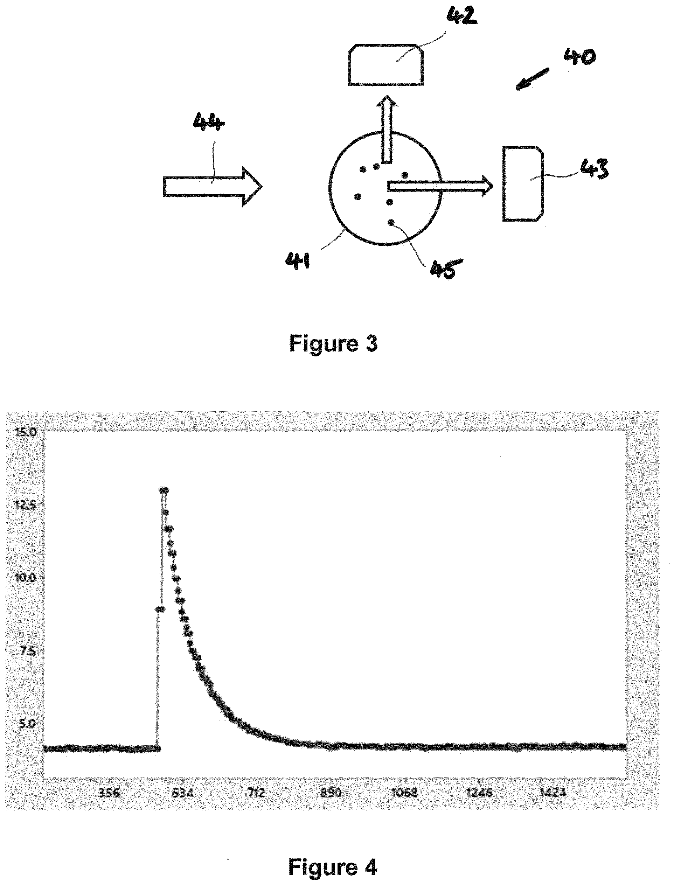

As shown schematically in Figure 3, the photometer 40 may comprise a flow cell 41 in which detection of particles 45 may take place. Incoming electromagnetic radiation 44 may enter the flow cell 41 and be scattered and/or attenuated by the particles 45. A first detector 42 may be provided for detecting electromagnetic radiation scattered by the particles 45. A second detector 43 may be provided for detecting attenuation of the incoming electromagnetic radiation 44.

In use the photometer 40 generates a photometer signal based on scattering and/or attenuation of the electromagnetic radiation by particles that have passed through the porous structure 13 and out of the outlet end 12 of the wall-flow filter 10. The photometer signal may be generated based on signals detected by the first detector 42 and/or the second detector 43.

The incoming electromagnetic radiation 44 may be from a light source, for example an LED light source, optionally a blue LED light source, optionally a blue LED light source emitting light with a wavelength of 400 to 490nm, optionally 450 to 490nm, optionally at 470nm.

The flow cell 41 may have a path length between the light source and the at least one light detector of 75 to 100mm, optionally 90mm.

The photometer 40 may comprise an amplifier, wherein a detected voltage of the first detector 42 and/or the second detector 43 is amplified by a factor of greater than 5,000 to produce the photometer signal, optionally by a factor of greater than 9,000, optionally by a factor of 9,999 +/- 500.

In some examples the photometer 40 may be a turbidimeter. For example, the photometer 40 may be a Kemtrak® TC007 turbidimeter, available from Kemtrak AB, Täby, Sweden.

The apparatus 1 may be configured such that all of the gas flow exiting the outlet end 12 of the wall-flow filter 10 passes through the flow cell 41 of the photometer 40.

The controller 30 is configured to detect at a plurality of points in time throughout a detection period a photometer signal of the photometer 40 based on scattering and/or attenuation of electromagnetic radiation by particles 45 that have passed through the porous structure 13 and out of the outlet end 12 of the wall-flow filter 10. In addition, the controller 30 is configured to obtain a photometer signal profile based on the detected photometer signal throughout the detection period and to obtain a characteristic of the wall-flow filter 10 and/or make a qualitative assessment of the wall-flow filter 10 based on the photometer signal profile.

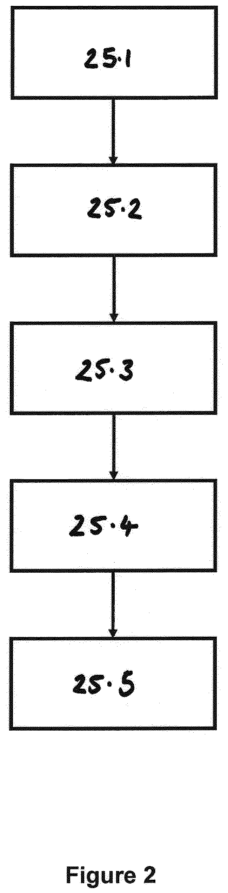

Figure 2 illustrates a method of assessing the wall-flow filter 10.

In step 25.1 a gas flow is established through the wall-flow filter 10 from the inlet end 11 to the outlet end 12 via the porous structure 13. For example the apparatus 1 may be used to establish the gas flow.

In step 25.2 particles are entrained in the gas flow so that the particles pass into the wall-flow filter 10 through the inlet end 11 causing at least a portion of the particles to be deposited on and/or in the porous structure 13. Entrainment of the particles may be accomplished by spraying them into the gas flow using the spray nozzle 20 or other spray device.

In step 25.3 the photometer 40 located downstream of the outlet end of the wall-flow filter 10 is used to detect at a plurality of points in time throughout a detection period a photometer signal related to scattering and/or attenuation of electromagnetic radiation by particles 45 that have passed through the porous structure 13 and out of the outlet end 12 of the wall-flow filter 10.

The photometer signal may, for example, be detected at a sampling rate of 0.5 to 5 samples/second, optionally at 1 sample/second. The photometer 40 may be zeroed multiple times throughout the detection period, optionally the photometer 40 is zeroed before each detection of the photometer signal throughout the detection period.

During this process the photometer signal may be amplified.

In step 25.4 a photometer signal profile is obtained based on the detected photometer signal throughout the detection period. The photometer signal profile may be plotted and displayed for visual assessment and/or held in memory for automatic or semi-automatic assessment using computing means.

In step 25.5 a characteristic of the wall-flow filter 10 is obtained and/or a qualitative assessment of the wall-flow filter 10 is made based on the photometer signal profile.

Figure 4 illustrates an example of a photometer signal profile obtained using the method. The x-axis shows detection events by number (which may alternatively be plotted as time where a fixed sampling rate for detections is used) and the y-axis shows the photometer signal strength (which may, for example be the voltage of the detected signal).

The photometer signal profile of Figure 4 exhibits a single peak very soon after particles, for example of dry powder, are first entrained into the gas flow. The signal strength then falls rapidly as particles are deposited within the porous structure 13.

In some examples making the qualitative assessment of the wall-flow filter 10 may comprise comparing the photometer signal profile against one or more predetermined photometer signal profiles.

In some examples making the qualitative assessment of the wall-flow filter 10 may comprise comparing one or more characteristics of the photometer signal profile against one or more threshold values.

The one or more characteristics of the photometer signal profile subject to review or assessment may include one or more of a peak height, a number of peaks, a decay rate, a decay time, and a numerical integral of the photometer signal profile.

In some examples obtaining the characteristic of the wall-flow filter 10 may be based on numerical integration of the photometer signal profile throughout the detection period. Thus a numerical integral based on the photometer signal profile may be obtained (for example representing the area under the curve of the photometer signal profile as plotted in the example of Figure 4).

The characteristic of the wall-flow filter 10 may comprise one or more of a mean pore size and/or a wall thickness and/or a porosity of the wall-flow filter 10.

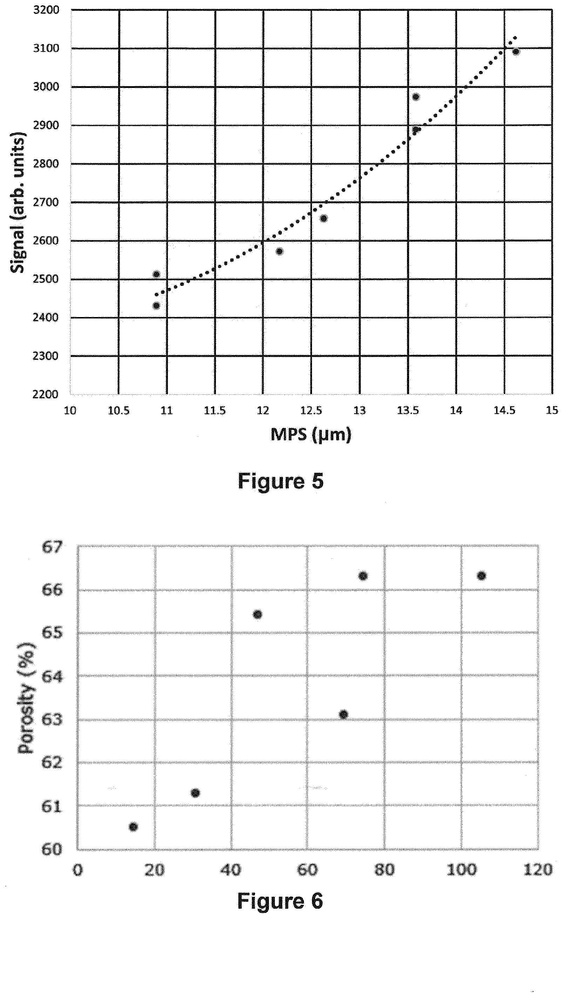

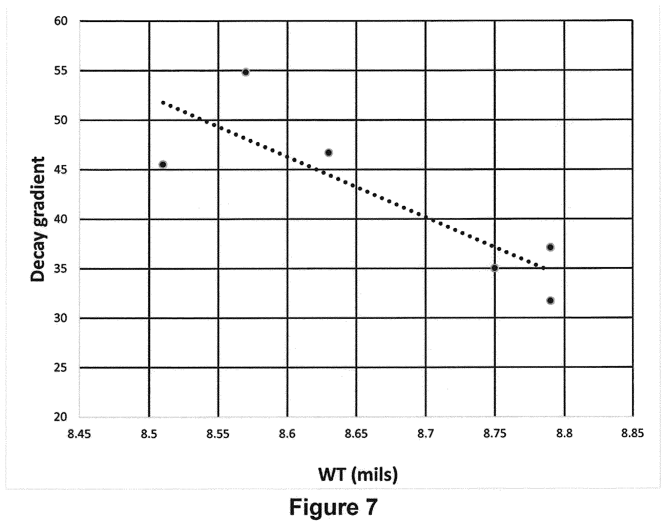

It has been found that the numerical integral of the photometer signal profile may provide a useful correlation with the mean pore size and/or a wall thickness and/or a porosity of the wall-flow filter 10. For example, Figure 5 illustrates the correlation of the numerical integral (represented on the y-axis) with the mean pore size (represented on the x-axis). A positive correlation is evident. In another example, Figure 6 illustrates the correlation of the numerical integral (represented on the x-axis) with the porosity (represented on the y-axis). A positive correlation is evident. In another example, Figure 7 illustrates the correlation of the decay gradient (represented on the y-axis) with the wall thickness (represented on the x-axis). A negative correlation is evident.

The mean pore size, porosity and wall thickness are themselves useful pieces of information about the wall-flow filter 10. In addition together with the backpressure of the wall-flow filter 10, this information may be useful in calculating or inferring the filtration efficiency of the wall-flow filter 10.

As well as making use of the numerical integral of the photometer signal profile, other characteristics of the profile may be used to assess the wall-flow filter 10. For example, the method may comprise determining whether and/or an extent to which the photometer signal profile matches or deviates from a predetermined photometer signal profile. The comparison may be made manually by a human operator (for example by direct visual comparison). Alternatively, and preferably the comparison may be made automatically or semi-automatically using computing means.

The comparison may be used to determine useful information about the wall-flow filter 10. For example, the useful information may be to identify those filters that require more detailed examination. Thus, the qualitative assessment may be assessing whether the wall-flow filter 10 passes or fails - with failing filters being sent for additional examination.

Making the qualitative assessment of the wall-flow filter 10 may comprise comparing one or more characteristics of the photometer signal profile against one or more threshold values. For example, the one or more characteristics of the photometer signal profile may include one or more of a peak height, a number of peaks, a decay rate, a decay time, and a numerical integral of the photometer signal profile.

Further aspects of the present disclosure are set out in the following clauses:

Clause 1. A method of assessing a wall-flow filter, the wall-flow filter having an inlet end and an outlet end with the inlet end and the outlet end being separated by a porous structure, the method comprising:

a) establishing a gas flow through the wall-flow filter from the inlet end to the outlet end via the porous structure;
b) entraining particles in the gas flow so that the particles pass into the wall-flow filter through the inlet end causing at least a portion of the particles to be deposited on and/or in the porous structure;
c) using a photometer located downstream of the outlet end of the wall-flow filter to detect at a plurality of points in time throughout a detection period a photometer signal related to scattering and/or attenuation of electromagnetic radiation by particles that have passed through the porous structure and out of the outlet end of the wall-flow filter;
d) obtaining a photometer signal profile based on the detected photometer signal throughout the detection period; and
e) obtaining a characteristic of the wall-flow filter and/or making a qualitative assessment of the wall-flow filter based on the photometer signal profile.

Clause 2. The method of clause 1, wherein making the qualitative assessment of the wall-flow filter comprises comparing the photometer signal profile against one or more predetermined photometer signal profiles.

Clause 3. The method of clause 1 or clause 2, wherein making the qualitative assessment of the wall-flow filter comprises comparing one or more characteristics of the photometer signal profile against one or more threshold values.

Clause 4. The method of clause 3, wherein the one or more characteristics of the photometer signal profile include one or more of a peak height, a number of peaks, a decay rate, a decay time, and a numerical integral of the photometer signal profile.

Clause 5. The method of any preceding clause, wherein obtaining the characteristic of the wall-flow filter is based on numerical integration of the photometer signal profile throughout the detection period.

Clause 6. The method of clause 5, wherein the characteristic of the wall-flow filter comprises one or more of a mean pore size and/or a wall thickness and/or a porosity of the wall-flow filter.

Clause 7. The method of clause 5 or clause 6, further comprising measuring a backpressure of the wall-flow filter during and/or after deposition of the particles on or in the porous structure.

Clause 8. The method of clause 7, further comprising calculating or inferring a filtration efficiency of the wall-flow filter based on the one or more characteristics of the wall-flow filter and the backpressure of the wall-flow filter.

Clause 9. The method of any preceding clause, further comprising measuring a change in mass of the wall-flow filter during deposition of the particles on and/or in the porous structure; and calculating or inferring a filtration efficiency of the wall-flow filter based on the characteristic of the wall-flow filter and the change in mass of the wall-flow filter.

Clause 10. The method of any preceding clause, wherein obtaining the characteristic of the wall-flow filter and/or making the qualitative assessment of the wall-flow filter is accomplished without counting the particles before they flow into the inlet end of the wall-flow filter.

Clause 11. The method of any preceding clause, wherein the detection period covers at least the period in time when the particles are being entrained in the gas flow.

Clause 12. The method of any preceding clause, wherein the photometer signal is detected at a sampling rate of 0.5 to 5 samples/second; optionally at 1 sample/second.

Clause 13. The method of any preceding clause, wherein the photometer is zeroed multiple times throughout the detection period; optionally wherein the photometer is zeroed before each detection of the photometer signal throughout the detection period.

Clause 14. The method of any preceding clause, wherein all of the gas flow exiting the outlet end of the wall-flow filter passes through a flow cell of the photometer.

Clause 15. The method of any preceding clause, wherein the photometer comprises a flow cell, a light source and at least one light detector.

Clause 16. The method of clause 15, wherein the flow cell has a path length between the light source and the at least one light detector of 75 to 100mm; optionally 90mm.

Clause 17. The method of clause 15 or clause 16, wherein the photometer comprises an LED light source; optionally a blue LED light source; optionally a blue LED light source emitting light with a wavelength of 400 to 490nm, optionally 450 to 490nm, optionally at 470nm.

Clause 18. The method of any one of clauses 15 to 17, wherein the photometer comprises an amplifier, wherein a detected voltage of the light detector is amplified by a factor of greater than 5,000 to produce the photometer signal, optionally by a factor of greater than 9,000, optionally by a factor of 9,999 +/- 500.

Clause 19. The method of any preceding clause, wherein the photometer is a turbidimeter.

Clause 20. The method of any preceding clause, wherein the particles entrained in the gas flow are particles of dry powder.

Clause 21. The method of any preceding clause, wherein the method further comprises calcining the wall-flow filter after deposition of the particles on and/or in the porous structure.

Clause 22. Apparatus for applying particles to a wall-flow filter, the wall-flow filter having an inlet end and an outlet end with the inlet end and the outlet end being separated by a porous structure, the apparatus comprising:

a) a holder for holding the wall-flow filter;
b) an inlet chamber in communication with the inlet end;
c) a vacuum generator in communication with the outlet end for establishing a gas flow through the wall-flow filter from the inlet end to the outlet end;
d) a device for spraying the particles into or within the inlet chamber;
e) a photometer located downstream of the outlet end of the wall-flow filter; and
f) a controller configured to:

i) detect at a plurality of points in time throughout a detection period a photometer signal of the photometer based on scattering and/or attenuation of electromagnetic radiation by particles that have passed through the porous structure and out of the outlet end of the wall-flow filter, and
ii) to obtain a photometer signal profile based on the detected photometer signal throughout the detection period; and
iii) to obtain a characteristic of the wall-flow filter and/or make a qualitative assessment of the wall-flow filter based on the photometer signal profile.

Clause 23. The apparatus of clause 22, further comprising a mass sensor for measuring a change in mass of the wall-flow filter during deposition of the particles on and/or in the porous structure.

Clause 24. The apparatus of clause 22 or clause 23, wherein the controller is configured to detect the photometer signal at a sampling rate of 0.5 to 5 samples/second; optionally at 1 sample/second.

Clause 25. The apparatus of any one of clauses 22 to 24, wherein the controller is configured to zero the photometer multiple times throughout the detection period; optionally to zero the photometer before each detection of the photometer signal throughout the detection period.

Clause 26. The apparatus of any one of clauses 22 to 25, wherein the apparatus is configured such that all of the gas flow exiting the outlet end of the wall-flow filter passes through a flow cell of the photometer.

Clause 27. The apparatus of any one of clauses 22 to 26, wherein the photometer comprises a flow cell, a light source and at least one light detector.

Clause 28. The apparatus of clause 27, wherein the flow cell has a path length between the light source and the at least one light detector of 75 to 100mm; optionally 90mm.

Clause 29. The apparatus of any one of clauses 27 to 28, wherein the photometer comprises an LED light source; optionally a blue LED light source; optionally a blue LED light source emitting light with a wavelength of 400 to 490nm, optionally 450 to 490nm, optionally at 470nm.

Clause 30. The apparatus of any one of clauses 27 to 29, wherein the photometer comprises an amplifier, wherein a detected voltage of the light detector is amplified by a factor of greater than 5,000 to produce the photometer signal, optionally by a factor of greater than 9,000, optionally by a factor of 9,999 +/- 500.

Clause 31. The apparatus of any one of clauses 22 to 30, wherein the photometer is a turbidimeter.

Clause 32. The apparatus of any one of clauses 22 to 31, wherein the particles are particles of dry powder.

**Claims**

1.  A method of assessing a wall-flow filter, the wall-flow filter having an inlet end and an outlet end with the inlet end and the outlet end being separated by a porous structure, the method comprising:

    a) establishing a gas flow through the wall-flow filter from the inlet end to the outlet end via the porous structure;
    b) entraining particles in the gas flow so that the particles pass into the wall-flow filter through the inlet end causing at least a portion of the particles to be deposited on and/or in the porous structure;
    c) using a photometer located downstream of the outlet end of the wall-flow filter to detect at a plurality of points in time throughout a detection period a photometer signal related to scattering and/or attenuation of electromagnetic radiation by particles that have passed through the porous structure and out of the outlet end of the wall-flow filter;
    d) obtaining a photometer signal profile based on the detected photometer signal throughout the detection period; and
    e) obtaining a characteristic of the wall-flow filter and/or making a qualitative assessment of the wall-flow filter based on the photometer signal profile.

2.  The method of claim 1, wherein making the qualitative assessment of the wall-flow filter comprises comparing the photometer signal profile against one or more predetermined photometer signal profiles.

3.  The method of claim 1, wherein making the qualitative assessment of the wall-flow filter comprises comparing one or more characteristics of the photometer signal profile against one or more threshold values.

4.  The method of claim 3, wherein the one or more characteristics of the photometer signal profile include one or more of a peak height, a number of peaks, a decay rate, a decay time, and a numerical integral of the photometer signal profile.

5.  The method of claim 1, wherein obtaining the characteristic of the wall-flow filter is based on numerical integration of the photometer signal profile throughout the detection period.

6.  The method of claim 1, wherein obtaining the characteristic of the wall-flow filter and/or making the qualitative assessment of the wall-flow filter is accomplished without counting the particles before they flow into the inlet end of the wall-flow filter.

7.  The method of claim 1, wherein the photometer signal is detected at a sampling rate of 0.5 to 5 samples/second; optionally at 1 sample/second.

8.  The method of claim 1, wherein the photometer is zeroed multiple times throughout the detection period; optionally wherein the photometer is zeroed before each detection of the photometer signal throughout the detection period.

9.  The method of claim 1, wherein all of the gas flow exiting the outlet end of the wall-flow filter passes through a flow cell of the photometer.

10. The method of claim 1, wherein the photometer comprises a flow cell, a light source and at least one light detector.

11. Apparatus for applying particles to a wall-flow filter, the wall-flow filter having an inlet end and an outlet end with the inlet end and the outlet end being separated by a porous structure, the apparatus comprising:

a) a holder for holding the wall-flow filter;
b) an inlet chamber in communication with the inlet end;
c) a vacuum generator in communication with the outlet end for establishing a gas flow through the wall-flow filter from the inlet end to the outlet end;
d) a device for spraying the particles into or within the inlet chamber;
e) a photometer located downstream of the outlet end of the wall-flow filter; and
f) a controller configured to:

i) detect at a plurality of points in time throughout a detection period a photometer signal of the photometer based on scattering and/or attenuation of electromagnetic radiation by particles that have passed through the porous structure and out of the outlet end of the wall-flow filter, and
ii) to obtain a photometer signal profile based on the detected photometer signal throughout the detection period; and
iii) to obtain a characteristic of the wall-flow filter and/or make a qualitative assessment of the wall-flow filter based on the photometer signal profile.

12. The apparatus of claim 11, wherein the controller is configured to zero the photometer multiple times throughout the detection period; optionally to zero the photometer before each detection of the photometer signal throughout the detection period.

13. The apparatus of claim 11, wherein the apparatus is configured such that all of the gas flow exiting the outlet end of the wall-flow filter passes through a flow cell of the photometer.

14. The apparatus of claim 13, wherein the photometer comprises a flow cell, a light source and at least one light detector.

15. The apparatus of claim 14, wherein the flow cell has a path length between the light source and the at least one light detector of 75 to 100mm; optionally 90mm.

**Figure 1**

Figure 2

Figure 3

Figure 4

Figure 5

Figure 6

Figure 7

# EUROPEAN SEARCH REPORT

**Application Number**

EP 24 21 7398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/141722 A1 (WOOD STEWART P [US] ET AL) 6 June 2013 (2013-06-06) * paragraphs [0007], [0023], [0025], [0026], [0040], [0042], [0043]; figure 2 * | 1-15 | INV. G01N15/08 |
| X | WO 2022/264439 A1 (NGK INSULATORS LTD [JP]) 22 December 2022 (2022-12-22) * paragraphs [0014], [0017], [0042], [0056], [0060]; figures 1,2 * | 1-15 | |
| A | JP H01 171616 A (AGENCY IND SCIENCE TECHN) 6 July 1989 (1989-07-06) * paragraphs [0001], [0003]; figures 1,3 * | 1-15 | |
| A,D | WO 2011/151711 A1 (JOHNSON MATTHEY PLC [GB]; SUTTON NEAL [GB]; TWIGG MARTYN VINCINT [GB]) 8 December 2011 (2011-12-08) * page 16, line 8 - line 21; figure 1 * * page 18, line 26 - page 19, line 20; figure 13 * | 2,4 | |

**TECHNICAL FIELDS SEARCHED (IPC)**

G01N

The present search report has been drawn up for all claims

| Place of search | Date of completion of the search | Examiner |
|---|---|---|
| The Hague | 7 May 2025 | Eidmann, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7398

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | Publication date |
|---|---|---|---|
| US 2013141722 A1 | 06-06-2013 | BR 112013004675 A2 | 26-07-2016 |
| | | CA 2813354 A1 | 05-04-2012 |
| | | CN 103154711 A | 12-06-2013 |
| | | CN 106290399 A | 04-01-2017 |
| | | EP 2622329 A1 | 07-08-2013 |
| | | KR 20130114109 A | 16-10-2013 |
| | | US 2013141722 A1 | 06-06-2013 |
| | | WO 2012044570 A1 | 05-04-2012 |
| WO 2022264439 A1 | 22-12-2022 | JP 7022241 B1 | 17-02-2022 |
| | | JP 7488808 B2 | 22-05-2024 |
| | | JP 2023000914 A | 04-01-2023 |
| | | JP 2023000993 A | 04-01-2023 |
| | | WO 2022264439 A1 | 22-12-2022 |
| JP H01171616 A | 06-07-1989 | JP H044006 B2 | 27-01-1992 |
| | | JP H01171616 A | 06-07-1989 |
| WO 2011151711 A1 | 08-12-2011 | BR 112012030599 A2 | 13-06-2017 |
| | | CN 103079683 A | 01-05-2013 |
| | | EP 2576021 A1 | 10-04-2013 |
| | | JP 5865356 B2 | 17-02-2016 |
| | | JP 2013534463 A | 05-09-2013 |
| | | KR 20130111979 A | 11-10-2013 |
| | | KR 20180098416 A | 03-09-2018 |
| | | RU 2012157520 A | 20-07-2014 |
| | | US 2013243659 A1 | 19-09-2013 |
| | | US 2016310935 A1 | 27-10-2016 |
| | | WO 2011151711 A1 | 08-12-2011 |

EPO FORM P0459

For more details about this annex : see Official Journal of the European Patent Office, No. 12/82

**REFERENCES CITED IN THE DESCRIPTION**

**Patent documents cited in the description**

- EP 4013954 A1

- WO 2011151711 A